Europäisches Patentamt

European Patent Office

Office européen des brevets

(11) Publication number: **0 259 191 B1**

# EUROPEAN PATENT SPECIFICATION

(45) Date of publication of patent specification: **24.07.91**

(21) Application number: **87307858.8**

(22) Date of filing: **04.09.87**

(51) Int. Cl.⁵: **B65G 53/48,** E04B 1/76, B65G 53/40

(54) Method and apparatus for blowing mineral fibres.

(30) Priority: **05.09.86 GB 8621416**

(43) Date of publication of application: **09.03.88 Bulletin 88/10**

(45) Publication of the grant of the patent: **24.07.91 Bulletin 91/30**

(84) Designated Contracting States: **AT BE DE FR GB NL**

(56) References cited:
GB-A- 2 124 194
US-A- 3 529 870
US-A- 4 111 493

(73) Proprietor: **Rockwool Limited Pencoed Bridgend Mid Glamorgan CR35 6NY Wales(GB)**

(72) Inventor: **Williams, Peter 3 Downsview Close Aberthin Cowbridge S. Glamorgan CF7 7HG Wales(GB)**
Inventor: **Rayner, John Pencoed Farm Cefn Carfan Road Bryncethin Mid Glamorgan Wales(GB)**

(74) Representative: **Lawrence, Peter Robin Broughton et al GILL JENNINGS & EVERY 53-64 Chancery Lane London WC2A 1HN(GB)**

## Description

Mineral fibre insulation is customarily introduced into a cavity as a stream of mineral fibres entrained in air. The stream of fibres is generated by a blowing machine to which the mineral fibres are initially supplied as a compressed mass. The machine must separate the fibres as much as possible since improved insulation properties are obtained with increased degrees of separation.

A typical blowing machine comprises separating means for separating a mineral fibre mass and entraining means positioned beneath the separating means for receiving separated separated mineral fibres from the separating means and for entraining them in air. The separating means generally include a discharge chamber, that may also serve as a shredding chamber, and the base of this discharge chamber is defined by a lower wall that defines an outlet and that discharges into the entraining means. Thus this lower wall controls the rate of flow of fibres into the entraining means.

It is generally necessary to be able to vary the rate of fibres into the entraining means and this is generally done by varying the size of the outlet between the discharge chamber and the entraining means.

For instance in U.S. 4,111,493 the size of the outlet is varied by moving a hinged plate that defines part of the lower wall. In GB 2,103,695 the size of the outlet is varied by a horizontal, flat, gate valve.

A frequent problem with blowing machines is that blockage occurs and cavitation of the fibres tends to occur at one or more places in the machine and this in turn leads to variations in the rate of supply of the fibres and less effective separation of the fibres. In existing blowing machines blockage and cavitation has been a particular problem in the discharge chamber due to the construction of the lower wall, the outlet and the valve by which the side of the outlet is adjusted.

In US 3529870 a blowing machine is disclosed comprising a hopper with a valve at its bottom wherein the valve is curved and opens axially into a granulator to control the rate of supply of material to the granulator.

According to the invention an apparatus for producing a stream of mineral fibres entrained in air comprises air entraining means for entraining separated fibres into air and a discharge chamber positioned above the entraining means for discharging separated fibres into the air entraining means and the base of which is defined by a lower wall that defines an outlet that discharges into the entraining means and that controls the rate of flow of separated fibres into the entraining means, and there are one or more rotors in the discharge chamber each comprising one or more rotatable members mounted for rotation about a substantially horizontal axis, and there is a valve for varying the size of the outlet, and substantially all the lower wall of the discharge chamber is concave and is swept by some or all of the rotatable members as they rotate

characterised in that the valve is a rotating valve.

It is generally necessary to have conducted some separation of the fibres before they enter the discharge chamber and so, in use, the apparatus generally includes means for separating a mass of fibres into separated fibres before or after they enter the discharge chamber. This additional means may comprise any typical supply system such as the bale breaker hopper and screw conveyor described in GB 2,103,695 or the hopper and helical screw as described in GB 2,124,194 or the hopper and helical screw as described in U.S. 4,111,493. If the mass initially is bonded throughout then considerable work may have to be applied to it in order to separate the fibres sufficient for feeding into the discharge chamber of the invention, e.g., as described in GB 2,103,695. However if, as is preferred, the mass initially is a substantially unbonded mass of tufts of unbonded or, usually, bonded fibres then it is desirable to conduct less work on the fibres and helical screws as described in U.S. 4,111,493 or GB 2,129,039 may be more appropriate. If there is a hopper it may discharge into a store chamber above the discharge chamber, so as to minimise variations in flow of fibres to the discharge chamber.

The apparatus of the invention may be the entire blowing machine, including any hopper or other feed that is required to the discharge chamber. The apparatus may alternatively be a part of the blowing machine, e.g., the discharge chamber with the associated concave wall and outlet and rotor ready for fitting to an existing blowing machine in place of the conventional discharge chamber and valve.

The separating means may consist solely of the hopper (if present) and the described discharge chamber which will then serve also as the shredding chamber, or there may be an additional shredding chamber between the discharge chamber and the hopper. If there is an additional shredding chamber the discharge chamber normally contains two rotors but if the discharge chamber serves both for discharge and as the sole shredding chamber then it normally contains only one rotor.

The concave lower wall of the discharge chamber preferably has a substantially part-circular cross section and thus may be a substantially semi-cylindrical trough. The one or more rotatable members on the rotor should have substantially the same radius as the trough, e.g., from 75 to 100% of the radius of the trough, and should be mounted substantially co-axially with the trough in order that the rotatable member or members sweep the surface of the trough as they rotate. It is not essential for the trough to be truly circular in cross section or for the rotatable member or members to be co-axially mounted with it or to have exactly the same radius as it, provided the arrangement is such that the member or members sweep the trough, and especially the outlet, sufficient to prevent cavitation or blockage within the discharge chamber. Generally the or each rotor is constructed so as to cause separation of compressed fibres.

The rotatable members in the discharge chamber are normally provided by one or more radially extending screws or other members, such as radially extending arms or bars but if there purpose is primarily to sweep the lower wall of the chamber, rather than to effect separation of the fibres, then they may have some other configuration, for instance forming an open mesh cylinder. If the screw does not have a member that extends along the length of the rotor the members should be positioned such as to ensure that they prevent blockages in the opening.

The shape of the rotating valve is such that the outlet is, like the remainder of the lower wall, swept by the rotatable member or members and so generally has a curved configuration substantially the same as the remainder of the wall.

If the discharge chamber does have side walls extending above the semi-cylindrical or other concave surface then these walls should not have any upwardly facing surface that is horizontal or that is outwardly inclined to an extent sufficient to be liable to cause cavitation or blockage. For instance no wall should be outwardly inclined by more than about 20° from the vertical. Preferably any such side wall is substantially vertical or is inwardly curved.

It is preferred in the invention that all side walls of chambers should be substantially vertical, or inwardly inclined as described above and all base walls of chambers should be concave and should be swept by an appropriate rotatable member, as described.

The entrainment means may include a chamber for increasing the separation of fibres that have been received from the discharge chamber and this may be a secondary shredding chamber. This will generally contain at least two rotors each positioned to sweep a quarter-cylindrical base wall. The speed of rotation of the rotors in the secondary shredder is generally much higher than in the discharge chamber as this secondary chamber is intended to aerate the fibres. Typically for instance the rotor in the discharge chamber may rotate at 30 to 200, preferably 50 to 100 rpm while the rotors in the secondary shredder may rotate at 50 to 400 rpm, often in opposite directions and at different speeds. For instance one may rotate counter-clockwise at 70 to 250 rpm and the other may rotate clockwise at 70 to 250 rpm.

The entrainment means preferably comprise a rotary air lock positioned to receive fibres from the discharge chamber directly or indirectly (e.g., from the secondary shredding chamber) and comprising a cylinder into which air is fed and having a rotatable shaft with vanes mounted thereon to make a substantially airtight seal with the cylinder.

The preferred blowing apparatus of the invention consists, in use, of a hopper, a primary shredder fitted with a single rotor, a secondary shredder fitted with two rotors for aeration and further separation of the fibres, and the rotary air lock for final entrainment of the fibres. The rotating curved gate valve or other rotating valve for controlling the discharge of fibres may be between the secondary shredder (which thus serves as part of the separating means) and the rotary air lock but preferably is between the primary shredder (which thus serves as the discharge chamber) and the secondary shredder (which thus serves as part of the entraining means).

The apparatus of the invention can be used for blowing any of the conventional mineral fibres, for instance glass fibres or, especially, rock or slag fibres.

The invention is illustrated in the accompanying drawings in which:-

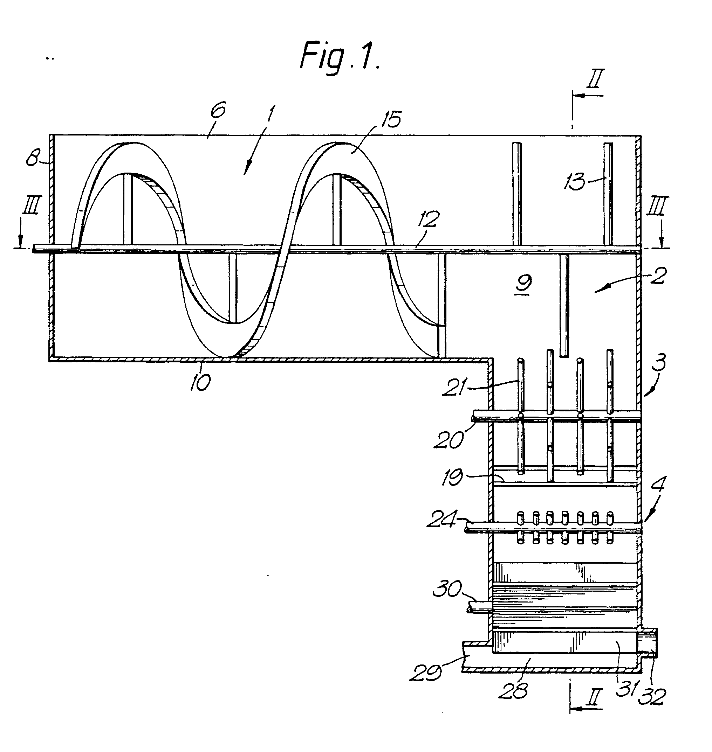

Figure 1 is a vertical longitudinal section through an apparatus according to the invention,

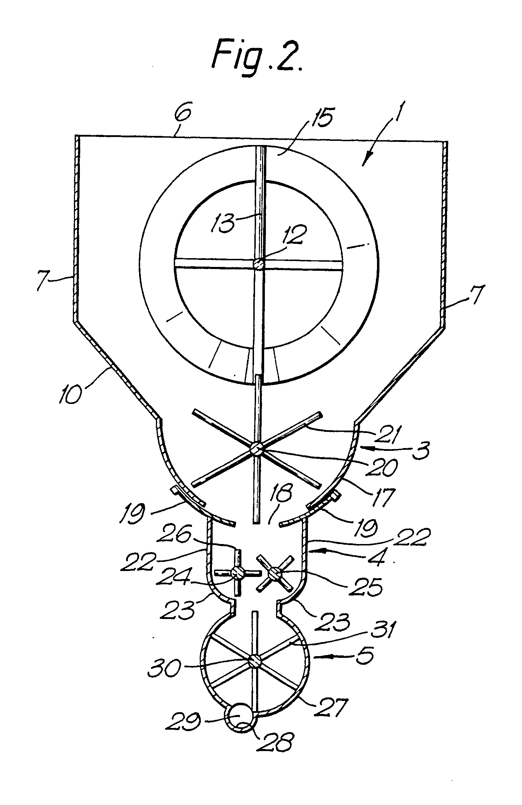

Figure 2 is a vertical section on the line II-II in Figure 1, and

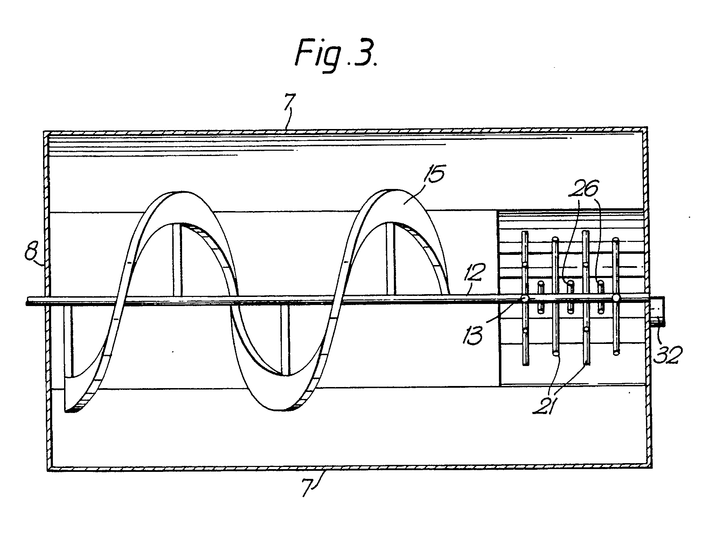

Figure 3 is a horizontal section of the line III-III in Figure 1.

The apparatus comprises a hopper 1, a store chamber 2, a primary shredder and discharge chamber 3, a secondary chamber 4 and a rotary air lock 5 to serve as the final component of the entraining means.

The hopper 1 may have an open top 6, side walls 7 and a wall 8 at one end, being open at the other end 9. It may have a lower wall 10 defining its base and may contain any convenient means for transporting the fibres into the store chamber 2 and, if appropriate for effecting some separation of the fibres on their way to the store chamber 2. As illustrated the hopper contains a rotatable shaft 12 carrying a worm 15 but any of the hopper arrangements mentioned in the patents discussed above may be used. Preferably however the hopper is constructed as described in the application being filed today by us reference 60/2619/01.

The chamber 2 merges into the shredder and discharge chamber 3. The base and side walls of this chamber are provided by a substantially semi-cylindrical trough 17 that defines an opening IS and that controls the rate of flow of fibres into the secondary shredder 4 and the rotary lock 5.

The size of the outlet 18 is regulated by appropriate manual or automatic adjustment of rotating valve gate plates 19 that are provided on appropriate guides (not shown) and that can be slid in or out in order to decrease or increase the size of the outlet and thus the rate of flow of fibres from the chamber 3. The plates 19 have substantially the same curvature as the remainder of the wall 17.

Within the chamber 3 there is a shaft 20 carrying rotor bars 21 arranged at about 30° to each preceding bar, and means (not shown) are provided for rotating the shaft. Although the rotor bars 21 have a radius a little smaller than the radius of the semi cylindrical trough 17 the axis of the shaft 20 is positioned such that the rotor bars sweep the trough 17 over a sufficient part of its surface area to prevent cavitation or blockage, especially near the outlet 18. The curved shape of the side walls, adjacent to where they merge with the remainder of the apparatus, helps minimise any risk of cavitation and blockage.

The rotor 20 generally rotates in the same direction as the rotor in the hopper but at a faster speed, for instance 75 rpm.

The secondary shredder 4 is defined by substantially vertical side walls 22 that merge with part-cylindrical walls 23 that define the base of the secondary shredder. Two shafts, 24 and 25, are mounted for rotation (by means not shown) within the chamber 4 and are positioned substantially co-axially with the walls 23. There are bars 26 mounted on each of the shafts at about 90° to each other. The bars are mounted much more closely than the bars 21 on rotor 20. The bars 26 sweep the walls 22 and 23.

The shafts 24 and 25 preferably rotate in opposite directions, 24 preferably being clockwise and 25 counter-clockwise. With a double shaft arrangement such as this it is very desirable for the radially extending members 26 to intermesh, so as to give a combing effect.

The shafts 24 and 25 rotate faster than the shaft 20 and preferably they rotate at different speeds. For instance shaft 24 may rotate clockwise at 190 rpm and shaft 25 counter-clockwise (in the same direction as the shaft 20) but at 110 rpm. These high speeds cause aeration of the fibre mass entering the chamber 4 and so prepare it for final entrainment in the rotary lock 5. This comprises a cylindrical chamber 27 provided with a groove 28 along its base connected to an air supply 29. A shaft 30 has rotary vanes 31 mounted on it to form a substantially airtight seal with the cylindrical wall of the chamber 27. Fibres from the secondary shredder 4 fall into the space between two adjacent vanes and then become entrained in air supplied along the groove 28 and blown out of the chamber 5 in conventional manner by outlet 32.

By the invention it is possible to obtain a very uniform degree of separation of the starting compressed mass into fibres (i.e., small fibre tufts) and to obtain a very constant rate of supply of these separated fibres into the rotary air lock 5 and thus into the air stream that leaves the apparatus through the duct 31 on its way to the wall cavity or other location where the fibres are to be injected.

Because of the high degree of separation of the fibres and the uniform supply of the fibres it is possible to inject the fibres very satisfactorily through a small orifice (e.g., 25mm) into the wall cavity and to fill the cavity, to a constant degree of insulation, using a much lower weight of fibres than has previously been required. This lower weight of fibres, for a constant degree of thermal insulation, is possible because of the more uniform distribution of the fibres within the cavity, which in turn is due to the greater degree of separation and the more uniform supply of fibres.

## Claims

1. Apparatus for producing a stream of mineral fibres entrained in air comprising air entraining means (5) for entraining separated fibres into air and a discharge chamber (3) positioned above the entraining means for discharging separated fibres into the air entraining means and the base of which is defined by a lower wall (17) that defines an outlet (18) that discharges into the entraining means and that controls the rate of flow of separated fibres into the entraining means, and there are one or more rotors (20) in the discharge chamber each comprising one or more rotatable members (21) mounted for rotation about a substantially horizontal axis, and there is a valve (19) for varying the size of the outlet, and substantially all the lower wall of the discharge chamber is concave and is swept by some or all of the rotatable members as they rotate,

   characterised in that the valve (19) is a rotating valve.

2. Apparatus according to claim 1 in which the concave lower wall of the discharge chamber (3) is a substantially semi-cylindrical trough (17).

3. Apparatus according to claim 2 in which the one or more rotatable members (21) on the rotor (20) are mounted substantially co-axially with the trough (17) such that the rotatable member or members sweep the surface of the trough as they rotate.

4. Apparatus according to any preceding claim in which the rotatable members (21) in the discharge chamber (3) are provided by one or more radially extending screws.

5. Apparatus according to any preceding claim in which the rotating valve (19) has a curved configuration substantially the same as the remainder of the lower side wall (17) of the discharge chamber.

6. Apparatus according to any preceding claim in which the side wall (17) of the discharge chamber (3) extends substantially vertically upwards.

7. Apparatus according to claim 6 including a shredding chamber (4) between the discharge chamber (3) and the air entraining means.

8. Apparatus according to any preceding claim in which the air entraining means comprise a rotary airlock (5) positioned to receive fibres directly or indirectly from the discharge chamber (3) and comprising a cylinder (27) into which air is fed and having a rotatable shaft (30) with veins (31) mounted thereon to make a substantially airtight seal with the cylinder.

9. Apparatus according to any preceding claim including means for separating a mass of fibres into separated fibres before or after they enter the discharge chamber (3).

10. Apparatus according to claim 9 comprising a hopper (1), a primary shredder (3) positioned to receive fibres from the hopper, a secondary shredder (4) positioned to receive fibres from the primary shredder and a rotary airlock (5) positioned to receive fibres from the secondary shredder and provided with means for entraining the fibres in air, and in which the said rotating valve (19) is between the primary and secondary shredders or between the secondary shredder and the rotary air lock.

**Revendications**

1. Appareil de production d'un jet de fibres minérales entraînées dans l'air comprenant un moyen entraîneur d'air (5) destiné à entraîné les fibres séparées dans l'air et un compartiment de décharge (3) positionné au-dessus du moyen entraîneur pour déverser les fibres séparées dans le moyen entraîneur d'air et dont le fond est délimité par une paroi inférieure (17) définissant un orifice (18) de décharge dans le moyen entraîneur et de régulation du débit d'écoulement des fibres séparées dans le moyen entraîneur, et il y a un rotor (20) ou plus dans le compartiment de décharge se composant chacun d'un élément orientable (21) ou plus monté(s) pour tourner autour d'un axe essentiellement horizontal, et il y a un clapet (19) devant varier la dimension de l'orifice, et toute la paroi inférieure du compartiment de décharge est essentiellement concave et balayée par une partie ou la totalité des éléments orientables durant leur rotation,

caractérisé en ce que le clapet (19) est un clapet rotatif.

2. Appareil selon la revendication 1 où la paroi inférieure concave du compartiment de décharge (3) est une auge essentiellement semi-cylindrique (17).

3. Appareil selon la revendication 2 où le ou les élément(s) orientable(s) (21) sur le rotor (20) sont montés de manière essentiellement coaxiale par rapport à l'auge (17) de sorte que le ou les élément(s) orientable(s) assure(nt) le balayage de la surface de l'auge durant leur rotation.

4. Appareil selon toute revendication précédente où les éléments orientables (21) dans le compartiment de décharge (3) sont fournis par une ou plusieurs hélices de prolongement radial.

5. Appareil selon toute revendication précédente où le clapet rotatif (19) présente une configuration courbe essentiellement semblable au reste de la paroi latérale inférieure (17) du compartiment de décharge.

6. Appareil selon toute revendication précédente où la paroi latérale (17) du compartiment de décharge (3) se prolonge considérablement à la verticale vers le haut.

7. Appareil selon la revendication 6 comprenant un compartiment déchiqueteur (4) placé entre le compartiment de décharge (3) et le moyen entraîneur d'air.

8. Appareil selon toute revendication précédente où le moyen entraîneur d'air comporte un sas à air rotatif (5) positionné pour recevoir les fibres directement ou indirectement du compartiment de décharge (3) et se composant d'un cylindre (27) où est introduit l'air et comportant un axe pivotable (30) aux palettes (31) montées sur celui-ci pour assurer une jonction avec le cylindre essentiellement étanche à l'air.

9. Appareil selon toute revendication précédente comportant un moyen de séparation d'une masse de fibres en fibres séparées avant ou après leur introduction dans le compartiment de décharge (3).

10. Appareil selon la revendication 9 comprenant une trémie (1), un déchiqueteur primaire (3) positionné de sorte à recevoir les fibres provenant de la trémie, un déchiqueteur secondaire (4) positionné de sorte à recevoir les fibres provenant du déchiqueteur primaire et un sas à air rotatif (5) positionné de sorte à recevoir les fibres du déchiqueteur secondaire et comportant un dispositif d'entraînement des fibres dans l'air, et où ledit clapet rotatif (19) est placé entre les déchiqueteurs primaire et secondaire ou entre le déchiqueteur secondaire et le sas à air rotatif.

**Patentansprüche**

1. Vorrichtung zum Herstellen eines Stromes von in Luft mitgeführten Mineralfasern, umfassend Luftmitführungsmittel (5), um getrennte Fasern in Luft mitzuführen, und eine Auslaufkammer (3), die über den Mitführungsmitteln liegt, um getrennte Fasern in die Luftmitführungsmittel zu entlassen, und deren Boden durch eine untere Wand (17) definiert ist, die einen Auslass (18) definiert, der in die Mitführungsmittel ausläuft, und der die Flussrate von getrennten Fasern in die Mitführungsmittel kontrolliert, und mit zwei oder mehreren Läufern (20) in der Auslaufkammer, wobei jeder ein oder mehrere drehbare Glied(er) (21) umfasst, die zur Drehung um eine im wesentlichen waagerechte Achse angebracht sind, und mit einem Ventil (19) zum Ändern der Grösse des Auslasses, und wobei die ganze untere Wand der Auslaufkammer im wesentlichen konkav ist und von einigen oder allen der drehbaren Glieder überstrichen wird, während sie sich drehen, dadurch gekennzeichnet, dass das Ventil (19) ein sich drehendes Ventil ist.

2. Vorrichtung nach Anspruch 1, in welcher die konkave untere Wand der Auslaufkammer (3) ein im wesentlichen halbkreisförmiger Trog ist.

3. Vorrichtung nach Anspruch 2, in welcher das eine oder mehrere drehbare Glied(er) (21) auf dem Läufer (20) im wesentlichen gleichachsig mit dem Trog (17) angebracht sind, so dass das drehbare Glied oder Glieder die Oberfläche des Troges überstreichen, während sie sich drehen.

4. Vorrichtung nach einem der vorhergehenden Ansprüche, worin die drehbaren Glieder (21) in der Auslaufkammer (3) von einer oder mehreren sich radial erstreckenden Schrauben vorgesehen sind.

5. Vorrichtung nach einem der vorhergehenden Ansprüche, worin das sich drehende Ventil (19) eine gewölbte Struktur hat, die im wesentlichen dieselbe wie der Rest der unteren Seitenwand (17) der Auslaufkammer ist.

6. Vorrichtung nach einem der vorhergehenden Ansprüche, in welcher die Seitenwand (17) der Auslaufkammer (3) sich im wesentlichen senkrecht nach oben erstreckt.

7. Vorrichtung nach Anspruch 6 mit einer Zerfasererkammer (4) zwischen der Auslaufkammer (3) und den Luftmitführungsmitteln.

8. Vorrichtung nach einem der vorhergehenden Ansprüche, in welcher die Luftmitführungsmittel eine sich drehende Luftschleuse (5) umfassen, die so gelagert ist, dass sie Fasern direkt oder indirekt von der Auslaufkammer (3) empfängt und einen Zylinder (27) umfasst, in welchen Luft gebracht wird und der eine drehbare Welle (30) mit darauf angebrachten Adern (31) hat, um einen im wesentlichen luftdichten Verschluss mit dem Zylinder herzustellen.

9. Vorrichtung nach einem der vorhergehenden Ansprüche mit Mitteln, um eine Masse von Fasern in voneinander getrennte Fasern zu trennen, bevor oder nachdem sie in die Auslaufkammer (3) eintreten.

10. Vorrichtung nach Anspruch 9, umfassend einen Trichter (1), einen Hauptzerfaserer (3), der angebracht ist, um Fasern von dem Trichter zu empfangen, einen Nebenzerfaserer (4), der angebracht ist, um Fasern von dem Hauptzerfaserer zu empfangen, und eine sich drehende Luftschleuse (5), die angebracht ist, um Fasern von dem Nebenzerfaserer zu empfangen, und mit Mitteln vorgesehen ist, um die Fasern in Luft mitzuführen, und in welcher das sich drehende Ventil zwischen dem Haupt- und Nebenzerfaserer oder zwischen dem Nebenzerfaserer und der Luftschleuse liegt.

# Fig .1.

# Fig.2.

Fig.3.